# EUROPEAN PATENT APPLICATION

(11) **EP 2 273 169 A2**
(43) Date of publication of application: **12.01.2011**
(21) Application number: 10169188.9
(22) Date of filing: 09.07.2010
(51) Int. Cl.: F16L 1/23, H02G 9/02

(54) **Tension Control Apparatus and Method**

(30) Priority: 09.07.2009 GB 0911944
(71) Applicant: IHC Engineering Business Limited, Riding Mill Northumberland NE44 6EG (GB)
(72) Inventor: Watchorn, Michael John, NE 43 7 LU Northumberland (GB)
(74) Representative: Harrison Goddard Foote

(57) **Abstract**

A tension control apparatus for controlling the tension in an elongate body, such as a pipe or cable, during undersea laying, comprises: an input path which receives the elongate body from an input trajectory; an output path from which the elongate body is output along an output trajectory; a curved tension control path (18) along which the elongate body passes between the input path and the output path; and a plurality of tension control elements (20). The tension control path is defined by said tension control elements (20), and said tension control elements are configured to extend and/or retract to adjust the length of the tension control path in response to a change in the tension of the elongate body. The tension control path may be spiral or helical.

## Description

This invention relates to an apparatus and method for controlling or compensating tension in an elongate linear body or member. More especially the present invention relates to an apparatus and method which seeks to improve the control of tension in an elongate linear body or member ("elongate body"). Control of tension can include either or both of seeking to avoid excess tension in the elongate body and seeking to avoid excess slack in the elongate body. Typically the elongate body may be a pipe, rope or cable. In some preferred applications of the present invention the elongate body is a pipe for undersea installation for the conveyance of fluids such as oil or gas. In other preferred applications the elongate body is a sub-sea communications cable. The present invention is in particular suitable for tension control while laying more than one elongate body in the same operation.

### BACKGROUND

Various types of operation are known in which tension, and especially slack, in elongate bodies products requires management, the following being examples:-
- during a simultaneous lay operations involving two co-ordinated pipelines - so called piggyback lay operations for offshore pipelines;
- during the manufacturing processes for pipelines, cables, ropes and similar linear products to control tension in the elongate body between the manufacturing equipment and storage equipment;
- to enable tension to be controlled between closely coupled equipment transferring rigid, semi rigid or flexible linear products;
- during remote burial operations for pre-laid cables and umbilical cables on the sea bed to enable vehicle manoeuvring without over-tensioning the laid product.

### Prior Art

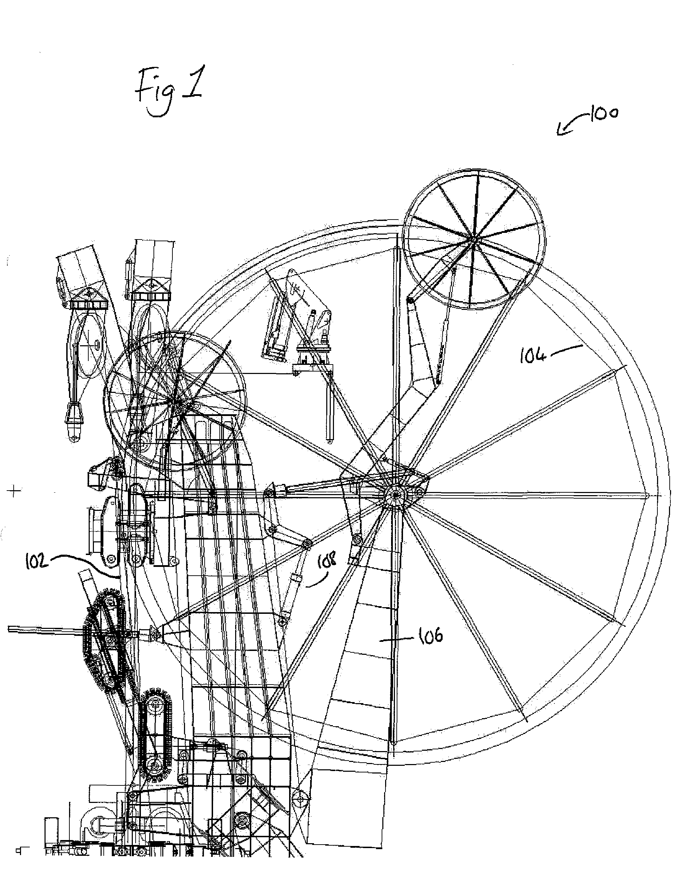

Figure 1 shows an example of a typical known slack management apparatus (100) for use in the laying of sub-sea pipes, cables (102) and the like. The apparatus (100) of Figure 1 relies on a curved surface, roller track way or guide wheel (104) mounted on arm (106) that is sprung by hydraulic, pneumatic or mechanical means (108) against the resultant tension from the compensated product (i.e. from the elongate body, in this case the pipe). As slack levels in the elongate body (pipe) (102) change during operation, the resultant force from the tension changes and the spring mechanism (108) causes the arm (106) to move to either increase or decrease the route length of the elongate body (102) through the apparatus (100) and thus provide a measure of control for the line tension of the elongate body (pipe) (100).

EP1250546 describes a "Movable tension compensator which moves around an equilibrium position to lengthen and shorten a pipe trajectory" being used on a pipelay reel ship for laying pipes in deep water.

US3982402 and WO96/35902 also describe movable structures that are used to control pipeline passage through lay equipment.

US4153218 describes a so-called "Dancer" assembly which is used for controlling slack and or tension in machines such as paper manufacturing and unrolling machines.

### Problems with the Prior Art

Traditional tension compensators (known as slack accumulators) used when laying sub-sea pipes and cables can take up considerable length of product (i.e. pipe or cable) route to allow significant amounts of slack to be accommodated.

Where equipment is operated in a marine environment off a floating vessel, the slack accumulator and compensated product (pipe or cable) catenary self weight will be acted on by the dynamic effects of the vessel motion caused by waves. The magnitude of these "dynamic forces" tends to reduce the quality of tension control that is achievable by the equipment because the self weight of the slack accumulator is often significant relative to changes in the line tension resultant force.

If the slack accumulator is mounted on a structure that itself changes its attitude relative to gravity and the equipment surrounding it, such as a pipeline installation tower, the slack accumulator geometry can become compromised at certain angles or positions in the operating range. These changes in self weight and resultant tension can make traditional sprung arm slack accumulators ineffectual or require a larger or variable spring capacity in some operational positions. This increases both cost and weight and when coupled with the problem identified in the previous paragraph tends to make a satisfactory degree of control more difficult to achieve.

### BRIEF SUMMARY OF THE DISCLOSURE

In accordance with one aspect of the present disclosure there is provided a tension control apparatus for controlling the tension in an elongate body (such as a pipe or cable) the apparatus defining an input path which receives the elongate body from an input trajectory and an output path from which the elongate body is output along an output trajectory and a curved tension control path along which the elongate body passes between the input path and the output path said tension control path being defined by a plurality of tension control elements configured to extend, thereby to increase the length of the tension control path, in response to a decrease in the tension in the elongate body and/or to retract thereby to decrease the length of the tension control path, in response to an increase in the tension in the elongate body

In preferred embodiments the tension control path and one or both of the input path and the output path together define a substantially circular path. In particular, the tension control path preferably defines a segment of a substantially circular path when the tension control elements are in a neutral (neither extended nor retracted) position.

Preferably each tension control element comprises a substantially radially disposed arm having an adjustable segment moveable substantially linearly along the longitudinal axis of the arm and a biasing means acting on said adjustable segment to resist the resultant tension force of the elongate body acting on the arm. Suitably the biasing means is a mechanical spring, or a hydraulic or pneumatic piston and cylinder arrangement.

Preferably each said substantially radially disposed arm carries or acts on a roller arrangement or the like at its outer end over which roller arrangement or the like the elongate body passes in use. Suitably the roller arrangement can comprise diabolo-type rollers.

In preferred embodiments the input path is defined by an input path element of fixed geometry, that is, the input path is not adjustable (in terms of path length). In preferred embodiments the output path is defined by an output path element of fixed geometry, that is, the output path is not adjustable (in terms of path length).

Preferably the input path element and the output path element each comprise a support member carrying a plurality of rollers (such as diabolo type rollers) the rollers being arranged to define the respective input and output paths. Thus, preferably the rollers are arranged along a segment of the circumference of a circle (ideally being the same circle as the substantially circular path defined by the tension control elements when the tension control elements are in their neutral (neither extended nor retracted) position).

In preferred embodiments the respective input path element and the output path element are axially spaced apart whereby the tension control path extends substantially spirally or helically between the input path and the output path.

In some preferred embodiments the input path element and the output path element are arranged so that the respective input path and the output path are tangentially parallel. In other preferred embodiments the input path element and the output path element are arranged so that the respective input path and the output path are divergent.

In preferred embodiments the alignment of the input and output path elements can be displaced whereby it is possible to introduce a lateral change between input and output elongate body line position and or angle.

In accordance with another aspect of the disclosure there is provided a method of controlling the tension in an elongate body, the method comprising the steps of:
i) providing an apparatus as defined in the first aspect of the disclosure;
ii) arranging an elongate body along said input path, through said tension control path and said output path;
iii) allowing adjustment of the length of the tension control path by extension and/or retraction of the tension control elements in response to a change in tension of the elongate body.

### BRIEF DESCRIPTION OF THE DRAWINGS

For a better understanding of the invention and to show how the same may be carried into effect, reference will be made, by way of example only, to the following drawings, in which:

Figure 1 is a view of a prior art slack management apparatus used in the laying of sub-sea pipes;

Figure 2A shows a side view of a tension control apparatus according to the invention;

Figure 2B shows a plan view of the tension control apparatus of Figure 2A according to one embodiment of the invention;

Figure 2C shows a plan view of the tension control apparatus of Figure 2A according to another embodiment of the invention; and

Figure 3 shows the tension control apparatus of the invention mounted for use on a pipe or cable laying vessel.

### DETAILED DESCRIPTION

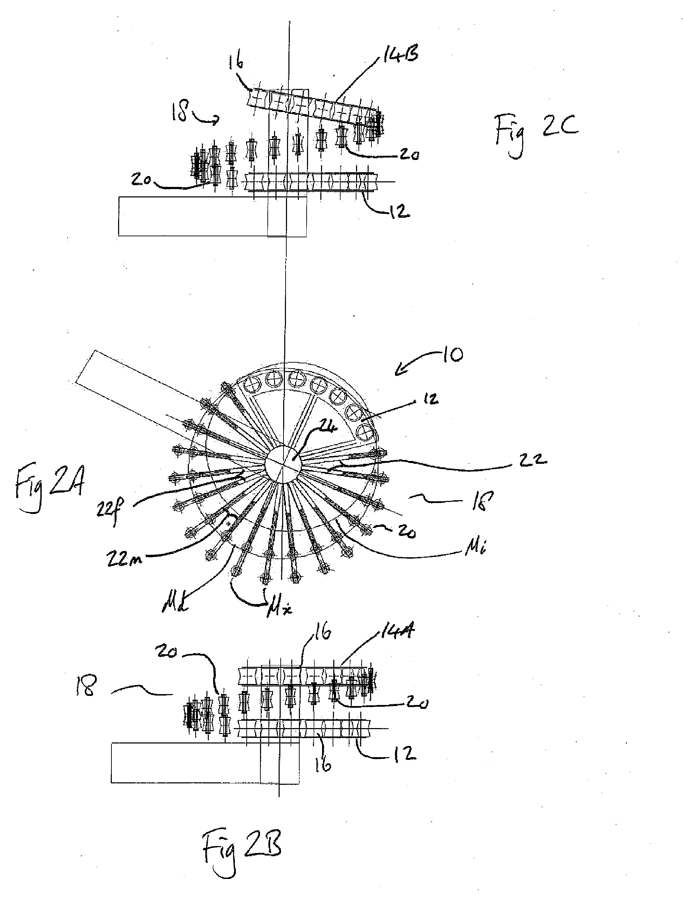

Referring now in particular to Figures 2A, 2B and 2C, the apparatus 10 according to the illustrated embodiment of the invention comprises an input path element 12 and an output path element 14A (Figure 2B) or 14B (Figure 2C). The input and out path elements 12, 14A, 14B each carry a plurality of rollers 16, outer surfaces of which define the respective input and output paths. The rollers 16 are typically diabolo-type rollers (that is rollers comprising juxtaposed frusto-conical portions). The rollers 16 fixedly are mounted along an arc of a circle, so that the respective input and output paths also define a segment of a circle's circumference.

The apparatus 10 further comprises a tension control path 18 which extends from the end of the input path to the start of the output path. The tension control path 18 is defined by outer surfaces of a sequence of rollers 20, which are also preferably diabolo-type rollers. Each roller 20 is mounted on, or acted on by, a tension control element which in the illustrated embodiment is a substantially radially directed arm 22. Each roller 20 can be mounted at a first end of a substantially radially directed arm 22. Alternatively, in a preferred configuration, the rollers 20 are not physically attached to the arm 22. In such a configuration, the arm 22 acts on a component (for example a nylon bush or the like) to which a respective roller 20 is attached.

The opposed second end of the arm 22 is connected to a central hub or boss 24, the constructional details of which are not relevant to the present invention. Note that the arms 22 are not shown in Figures 2B and 2C, for clarity of illustration. As can be seen from the side view of Figure 2A, arms 22 are arranged so that the rollers lie on a substantially circular path (i.e. so that the tension control path is substantially circular), the full details of which are discussed below. As is apparent from the plan views shown in Figures 2B and 2C, the arms 22 are arranged so that the tension control path, defined by the rollers 20, and extending between the input path and the output path, is substantially spiral or helical.

In operation of the apparatus 10, the elongate body 26 passes around the apparatus in a loop. Thus, the elongate body follows in sequence the input path, the tension control path and the output path, lying in contact with the respective rollers 16, 20.

The input path element 12 and the output path element 14A or 14B are mounted in fixed positions, that is, in a fixed attitude. Thus the rollers 16 of the input path element 12 are mounted in a fixed position and provide a fixed geometry for the arrival of the elongate body 26 to the apparatus 10. Similarly, the rollers 16 of the output path element 14A or 14B are mounted in a fixed position and provide a fixed geometry for the departure of the elongate body 26 from the apparatus 10. By displacing the alignment of the input path element 12 and the output path element 14A, 14B, (and consequently of their respective rollers16) it is possible to introduce a lateral change between input and output trajectories of the elongate body. Thus, in Figure 2B, the input path element 12 and the output path element 14A are arranged in parallel such that the arrival and departure (i.e. input and output) trajectories of the elongate body 26 are parallel. In contrast, in Figure 2C, the input path element 12 and the output path element 14B are not arranged in parallel such that the arrival and departure (i.e. input and output) trajectories of the elongate body 26 are divergent.

Each tension control element is configured so that its length changes in response to changes in the tension in the elongate body 26. When tension in the elongate body increases, the length of tension control elements is reduced, so decreasing the length of the tension control path and acting to reduce tension in the elongate body 26. Conversely, when tension in the elongate body decreases (e.g. such that there is slack in the elongate body 26) the length of the tension control elements is increased, so increasing the length of the tension control path and acting to increase the tension in the tension control body 26.

In the illustrated embodiment the tension control elements are substantially radial arms 22 and the length of each arm can change between a minimum indicated by line Mi through a middle position indicated by line Md to a maximum extended position indicated by the arms 22 marked Mx. Typically, arm 22 includes a fixed portion 22f adjacent to and attached to the boss 24 and a moveable portion 22m (such as a hydraulic cylinder) extending substantially radially outwardly from the fixed portion 22f. Rollers 20 move with the moveable portion 22m of the arms 22. Each roller 20 is conveniently mounted in a channel member which is maintained in fixed relation to the fixed portion 22f of arm 22. The roller 20 is slidably mounted within the channel member to move along a radial path. The roller 20 is desirably connected to a suitable block or bush such as a nylon block or bush, on which the first end of the arm 22 acts.

Biasing means are provided on or in the arms 22 to act against (to resist) the resultant tension force of the elongate body acting on the roller 20. Suitable biasing means can be a mechanical spring or a pneumatic or hydraulic arrangement. Thus radial movement of the rollers 20 in response to changes in the tension of the elongate body 26 results in a change in the path length of the tension control path to compensate for the changes in the tension of the elongate body 26. As will be readily apparent, as rollers 20 are moved by arms 22 in response to changes in tension in the elongate body 26, the tension control path defined by rollers 20 will cease to lie on a perfect circle. Nevertheless, an approximately circular configuration of the tension control path is retained. Indeed, even in a neutral configuration, the tension control path need not lie on a perfect circle.

In a preferred construction the moveable portions 22m (such as hydraulic cylinders) of the arms 22 vary in length. The moveable portions 22m nearest to the input and output path elements 12 (14A, 14B) are shorter than those distant from the input and output path elements 12 (14A, 14B). In this way, with the portions 22m at the inner position denoted by Mi the rollers 20 associated with the portions 22m nearest the input and output path elements 12 (14A, 14B) form a tangent with the fixed rollers 20 of the input and output path elements 12 (14A, 14B). This provides a smooth progression of the elongate body 26 from the input path element 12 to the tension control path and from the tension control path to the output path element (14A, 14B).

When being used with a rigid or semi rigid elongate body the apparatus 10 of the invention deforms the elongate body into the minimum permissible bend radius and then the compensation motion is achieved by elastic deformation of the elongate body as it passes round the apparatus 10.

It is further possible to provide two or more apparatus 10 of the invention in conjunction, usually where the length of the elongate body which needs to be compensated (i.e. changes in tension accommodated) exceeds the capability of a single apparatus. In a variation, the tension control path can be extended so that the helix or spiral provides a plurality of turns - that is, so that the elongate body is caused to loop around more than once.

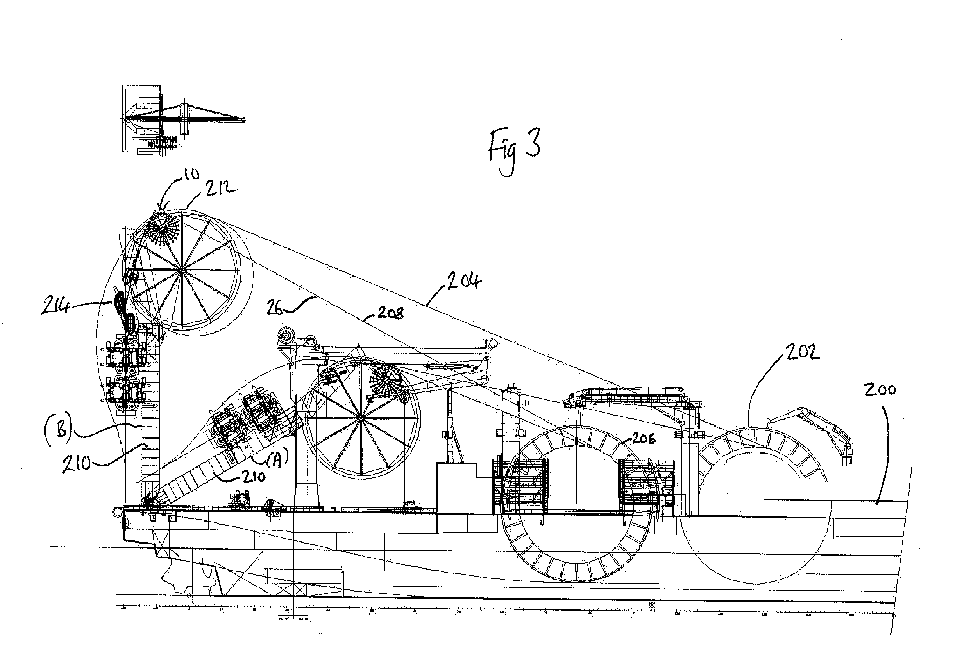

Referring now to Figure 3, there is shown a pipe or cable laying vessel 200 on which the apparatus 10 of the invention is arranged. The vessel 200 is configured for simultaneous laying of two coordinated pipelines or cables. In the illustrated example, the vessel is provided with a first storage reel 202 for the main elongate body, typically a main pipe or cable 204 (for example 3500t of 18" diameter pipe) and a second storage reel 206 for a secondary elongate body which is also typically a pipe or cable 208. The secondary pipe or cable 208 is typically smaller and more delicate than main pipe or cable 204. Therefore the inertia associated with the main pipe or cable 204 is considerably greater than that of the secondary pipe or cable 208. Thus, absent any tension compensation, the secondary pipe or cable 208 is vulnerable to breakage from snatch loading attributable to the main pipe or cable 204.

Vessel 200 is further provided with a lay tower 210. The tower 210 can adopt a range of angles appropriate to the operation being carried out. Tower 210 is shown in Figure 3 in two positions representing the typical extremes of its range of movement. Position (A) represents the lowest typical configuration at about 30° to the horizontal and position (B) represents the highest typical configuration of the tower 210 at which it is substantially vertical.

Main pipe 204 passes from storage reel 202 and over supporting arrangement 212 before passing through pipe straightening equipment 214 and clamping members or the like 216. Straightening equipment 214 is generally known in the art and corrects for deformation of the pipe 204 caused by storage on reel 202. Clamping members 216 control the downward passage of the main pipe as it is laid on the sea bed. Various types of such clamping arrangements are known in the art.

Secondary pipe or cable 208 passes from reel 206 around tension control apparatus 10 which provides necessary slack to protect the more delicate pipe or cable 208 from damage due to snatch loads or the like. The secondary pipe or cable 208 is associated with the main pipe 204 before the leaving the vessel for laying on the sea bed.

At least the following advantages accrue for the use of the apparatus of the invention:-
- the mass of the components that are sprung is minimised so that changes in tension in the elongate body due to attitude and vessel dynamics are reduced relative to the traditional sprung arm compensator;
- the product (elongate body) catenary and compensator (apparatus 10) self weight are carried by fixed structure, removing their dynamic effects from the controlled tension and slack;
- the package length of the apparatus 10 is significantly reduced relative to a traditional sprung arm slack accumulator;
- the entry and exit geometry for the product relative to the apparatus 10 is fixed enabling other pieces of equipment in the line to packaged closer than is possible with the traditional sprung arm compensator. It is sometimes possible to remove diverter sheaves and other equipment from the line path (i.e. the path taken by the elongate body from the storage reel onwards), improving (that is, reducing) the number of bend cycles to which the product is subjected as it passes through the apparatus 10.
- being able to provide lateral separation or angle changes between input and output lines can improve the machinery layout;
- by moving the rollers 16 of the output path element 14 in a lateral direction it is possible to facilitate packing the elongate body onto a storage reel without additional equipment or space needed to provide the sideways fleeting displacement;
- the relatively constant radius of the apparatus 10 ensures that cables / pipes do not undergo excessive plastic working as they pass through the apparatus 10.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A tension control apparatus for controlling the tension in an elongate body, such as a pipe or cable, comprising:
an input path which receives the elongate body from an input trajectory;
an output path from which the elongate body is output along an output trajectory;
a curved tension control path along which the elongate body passes between the input path and the output path; and
a plurality of tension control elements;
wherein the tension control path is defined by said tension control elements, and said tension control elements are configured to extend and/or retract to adjust the length of the tension control path in response to a change in the tension of the elongate body.

2. A tension control apparatus as claimed in claim 1 wherein the length of said tension control path is increased in response to a decrease in tension in the elongate body.

3. A tension control apparatus as claimed in claim 1 or 2 wherein the length of said tension control path is decreased in response to an increase in tension in the elongate body.

4. A tension control apparatus as claimed in any one of claims 1 to 3 wherein the tension control path and one or both of the input path and output path together define a substantially circular path.

5. A tension control apparatus as claimed in any of claims 1 to 3 wherein the tension control path defines a segment of a substantially circular path when the tension control elements are in a neutral position.

6. A tension control apparatus as claimed in any preceding claim wherein each tension control element comprises a substantially radially disposed arm having an adjustable segment moveable substantially linearly along the longitudinal axis of the arm and a biasing means acting on said adjustable segment.

7. A tension control apparatus as claimed in claim 6 wherein said arm carries or acts on a roller arrangement at its out end over which the elongate body passes in use.

8. A tension control apparatus as claimed in any preceding claim wherein the input path and the output path are respectively defined by an input path element and an output path element of fixed geometry.

9. A tension control apparatus as claimed in claim 8 wherein the input path element and the output path element each comprise a support element carrying a plurality of rollers, the rollers being arranged to define the respective input and output paths.

10. A tension control apparatus as claimed in claims 8 or 9 wherein the input path element and the output path element are axially spaced apart and the tension control path extends substantially spirally or helically between the input path and output path.

11. A tension control apparatus as claimed in claims 8 to 10 wherein the input path element and output path element are arranged so that the input path and output path are respectively tangentially parallel.

12. A tension control apparatus as claimed in claims 8 to 10 wherein the input path and output path are divergent.

13. A tension control apparatus as claimed in claim 8 to 12 wherein the input path and output path elements are displaceable thereby to introduce a lateral change between input and output elongate body line position and/or angle.

14. A method of controlling the tension in an elongate body, the method comprising the steps of:
i) providing an apparatus as claimed in any preceding claim;
ii) arranging an elongate body along said input path, through said tension control path and said output path;
iii) allowing adjustment of the length of the tension control path by extension and/or retraction of the tension control elements in response to a change in tension of the elongate body.
